# FASCICULE DE BREVET EUROPEEN

(11) **EP 4 077 476 B1**
(45) Date de publication et mention de la délivrance du brevet: **25.02.2026**
(21) Numéro de dépôt: 20830179.6
(22) Date de dépôt: 17.12.2020
(51) Int. Cl.: C08G 65/331, C04B 24/32, C08G 65/332, C04B 24/02, C04B 24/04, C04B 24/12, C04B 40/00, C04B 103/30

(54) **COMPOSÉS FLUIDIFIANTS POUR COMPOSITIONS HYDRAULIQUES**
FLUIDISIERENDE VERBINDUNGEN FÜR HYDRAULISCHE ZUSAMMENSETZUNGEN
FLUIDIFYING COMPOUNDS FOR HYDRAULIC COMPOSITIONS

(30) Priorité: 17.12.2019 FR 1914622
(43) Date de publication de la demande: 26.10.2022
(73) Titulaire: Starcin Holding France, 92400 Courbevoie (FR); SAINT-GOBAIN PLACO, 92400 Courbevoie (FR)
(72) Inventeur: COLAS, Antoine, 92340 BOURG-LA-REINE (FR); FROIDEVAUX, Vincent Etienne Claude, 75014 PARIS (FR); LEISING, Frédéric, 60300 AVILLY SAINT LEONARD (FR)
(74) Mandataire: Lavoix
(86) Numéro de dépôt international: PCT/EP2020/086679
(87) Numéro de publication internationale: WO 2021/122924

(56) Documents cités:
- EP-A1- 1 686 101
- WO-A1-02/22520
- WO-A2-2009/112647
- US-A1- 2013 019 779

## Description

La présente invention a pour objet de nouveaux composés fluidifiants, destinés notamment à être utilisés dans des compositions hydrauliques.

Les compositions hydrauliques sont des compositions comprenant un liant hydraulique. Un liant hydraulique est un liant qui se forme et durcit par réaction chimique avec de l'eau. A titre de liants hydrauliques peuvent être citées les compositions de sulfates et/ou d'aluminates de calcium, de chaux et de ciment. Les mortiers et les bétons, notamment les bétons préfabriqués et les bétons prêts à l'emploi, sont d'importance particulière. Ces matériaux peuvent être destinés notamment au bâtiment, aux ouvrages de génie civil ou à la fabrication de pièces en béton.

Il est connu d'ajouter aux liants hydrauliques des fluidifiants (également appelés plastifiants ou superplastifiants) qui permettent de fluidifier la composition hydraulique et ainsi de diminuer la teneur en eau de la pâte de liant hydraulique. Ainsi, la pâte de liant hydraulique présente, après durcissement, une structure plus dense. Ceci se traduit par une résistance mécanique plus élevée.

On connaît notamment les polycarboxylates de polyoxyalkylène (PCP), particulièrement efficaces pour fluidifier les compositions hydrauliques et aussi appelés superplastifiants.

D'autres superplastifiants polymères pour la fluidification des mortiers de béton ont été développés, comme les mono- chaînes poly (oxyde d'éthylène) bis-phosphonates décrit dans la demande FR 2 696 736, et commercialisés par la Société CHRYSO sous le nom de CHRYSO^{®}Fluid Optima 100. La demande FR 2 925 484 de la société LAFARGE SA décrit également un type de superplastifiants polymères pour la fluidification des mortiers de béton constitué de dérivés ester de l'acide gallique.

Toutefois, ces superplastifiants présentent des propriétés de réduction d'eau et de robustesses aux argiles et aux sulfates alcalins en solution limitées. De plus, il est à noter que la stabilité chimique dans un milieu très fortement alcalin du béton est très limitée dans le cas des structures décrites dans la demande FR 2 925 484.

Il existe donc à ce jour un besoin de disposer de composés fluidifiants plus performants.

La présente invention a donc pour but de fournir de nouveaux composés particulièrement performants comme fluidifiants dans des compositions hydrauliques.

Ainsi, la présente invention concerne un composé de formule (I) suivante : 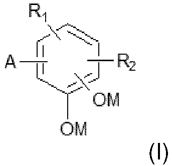 dans laquelle :
- M est choisi dans le groupe constitué de H, des métaux alcalins et alcalino-terreux et des groupes ⁺HNRR', R et R' étant choisis indépendamment l'un de l'autre parmi H, les (C₁-C₃)alkyles, linéaires ou ramifiés, et les alcools en C₁-C₃, linéaires ou ramifiés ;
- R₁ est choisi dans le groupe constitué de H, A₁ et des groupes (C₁-C₄)alkyles, linéaires ou ramifiés, lorsque A répond à la formule (1) ci-après, ou, lorsque A répond à la formule (2) ou (3) ci-dessous, R₁ est choisi dans le groupe constitué de H et des groupes (C₁-C₄)alkyles, linéaires ou ramifiés ;
- R₂ est choisi dans le groupe constitué de H, OM, M étant tel que défini ci-dessus et des groupes (C₁-C₄)alkyles, linéaires ou ramifiés ;
- A représente :
   * un groupe A₁ de formule (1) suivante : 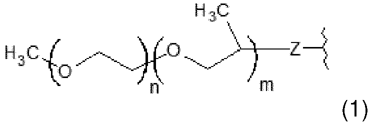 dans laquelle :
      - n est un nombre entier allant de 1 à 40, de préférence de 1 à 31 ;
      - m est un nombre entier allant de 1 à 40, de préférence de 1 à 31 ; et
      - Z est choisi dans le groupe constitué :
         . des groupes -CHR₃-NH-, R₃ étant choisi dans le groupe constitué de H, de COOH et des groupes (C₁-C₆)alkyles, linéaires ou ramifiés ;
         . des groupes -C(=O)-NH- ; et
         . des groupes -C(R₅)=N-, R₅ étant H ou Me, de préférence H ;
   * un groupe A₂ de formule (2) suivante : 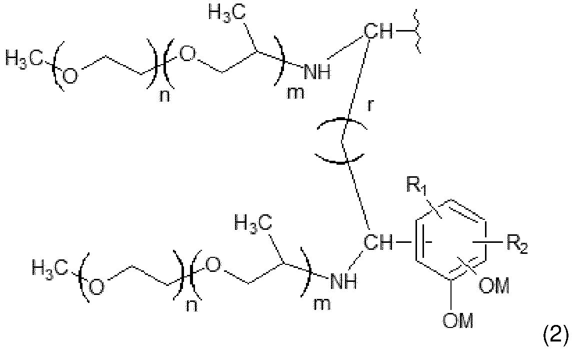 dans laquelle :
      - n est un nombre entier allant de 1 à 40, de préférence de 1 à 31 ;
      - m est un nombre entier allant de 1 à 40, de préférence de 1 à 31 ;
      - r est 0 ou un nombre entier allant de 1 à 6 ; et
      - M, R₁ et R₂ sont tels que définis ci-dessus dans la formule (I) ;
   * un groupe A₃ de formule (3) suivante : 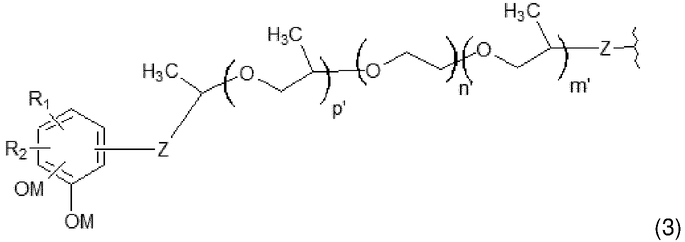 dans laquelle :
      - n'est un nombre entier allant de 1 à 50, de préférence de 1 à 39 ;
      - la somme m'+p' varie de 1 à 6 ;
      - m' est un nombre entier allant de 1 à 5 ;
      - p' est un nombre entier allant de 1 à 5 ; et
      - M, R₁ et R₂ sont tels que définis ci-dessus dans la formule (I) ;
      - Z est tel que défini ci-dessus dans la formule (1).

Dans le cadre de la présente invention, on entend par :
- Cₜ-C_{z} où t et z peuvent prendre les valeurs de 1 à 6, une chaîne carbonée pouvant avoir de t à z atomes de carbone, par exemple C₁-C₄ une chaîne carbonée qui peut avoir de 1 à 4 atomes de carbone ;
- un groupe alkyle : un groupe aliphatique hydrocarboné, saturé, linéaire ou ramifié comprenant, sauf mention contraire, de 1 à 6 atomes de carbone. A titre d'exemples, on peut citer les groupes méthyle, éthyle, n-propyle, isopropyle, butyle, isobutyle, tertbutyle ou pentyle.

A titre de métal alcalin, on peut par exemple citer le sodium, le lithium ou le potassium. A titre d'alcalino-terreux, on peut citer le magnésium et le calcium.

Dans le cadre de la présente invention, un alcool en C₁-C₃, linéaire ou ramifié, désigne un alkyle en C₁-C₃, linéaire ou ramifié, substitué par au moins un groupe hydroxyle.

De préférence, dans les formules (1) et (2) susmentionnées, n est un nombre entier allant de 1 à 31 et m est un nombre entier allant de 1 à 31.

Selon un mode de réalisation, les composés de l'invention sont des composés de formule (I) susmentionnée dans laquelle A représente un groupe A₁ de formule (1) et R₁ est choisi dans le groupe constitué de H, A₁ et des groupes (C₁-C₄)alkyles, linéaires ou ramifiés.

Selon un mode de réalisation, les composés de l'invention répondent à la formule (II) suivante : 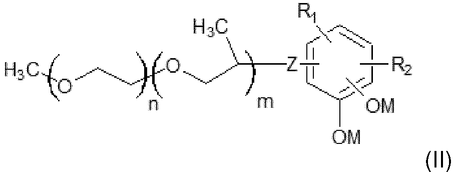 dans laquelle :
- R₁ est choisi dans le groupe constitué de H et des groupes (C₁-C₄)alkyles, ou représente un groupe A₁ de formule (1) telle que définie ci-dessus ; et
- M et R₂ sont tels que définis ci-dessus dans la formule (I) et
- n et m sont tels que définis ci-dessus dans la formule (1).

De préférence, dans la formule (II), n est un nombre entier allant de 1 à 31 et m est un nombre entier allant de 1 à 31.

Selon un mode de réalisation, dans la formule (II), R₂ est un groupe OM, M étant tel que défini ci-dessus.

Selon un mode de réalisation, dans la formule (II), n varie de 19 à 31.

Selon un mode de réalisation, dans la formule (II), m varie de 3 à 10.

Selon un mode de réalisation, dans la formule (II), Z est choisi dans le groupe constitué :
- des groupes -CHR₃-NH-, R₃ étant choisi dans le groupe constitué de H, de COOH et des groupes (C₁-C₆)alkyles, linéaires ou ramifiés ; et
- des groupes -C(=O)-NH-.

Selon un mode de réalisation, dans la formule (II), Z est choisi dans le groupe constitué des groupes -CHR₃-NH-, R₃ étant choisi dans le groupe constitué de H, de COOH et des groupes (C₁-C₆)alkyles, linéaires ou ramifiés.

Selon un mode de réalisation, dans la formule (II), Z est un groupe -CHR₃-NH-où R₃ est H ou COOH, ou un groupe -C(=O)-NH-.

Selon un mode de réalisation, dans la formule (II), Z est un groupe -CHR₃-NH-où R₃ est H ou COOH.

Selon un mode de réalisation, les composés de l'invention répondent à la formule (II), dans laquelle :
- R₂ est un groupe OM, M étant tel que défini ci-dessus ;
- n varie de 19 à 31 ;
- m varie de 3 à 10 ; et
- Z est choisi dans le groupe constitué :
   . des groupes -CHR₃-NH-, R₃ étant choisi dans le groupe constitué de H, de COOH et des groupes (C₁-C₆)alkyles, linéaires ou ramifiés ; et
   . des groupes -C(=O)-NH-.

Selon un mode de réalisation, les composés de l'invention répondent à la formule (II), dans laquelle :
- R₂ est un groupe OM, M étant tel que défini ci-dessus ;
- n varie de 19 à 31 ;
- m varie de 3 à 10 ; et
- Z est choisi dans le groupe constitué des groupes -CHR₃-NH-, R₃ étant choisi dans le groupe constitué de H, de COOH et des groupes (C₁-C₆)alkyles, linéaires ou ramifiés.

De préférence, les composés de l'invention répondent à la formule (II) telle que définie ci-dessus, dans laquelle R₁ est H ou représente un groupe A₁ de formule (1) telle que définie ci-dessus.

Une famille préférée de composés de l'invention est formée de composés répondant à la formule (II) susmentionnée, dans laquelle :
- R₁ est H ou représente un groupe A₁ de formule (1) telle que définie ci-dessus ;
- R₂ est un groupe OM ;
- n varie de 19 à 31 ;
- m varie de 3 à 10 ; et
- Z est choisi dans le groupe constitué :
   . des groupes -CHR₃-NH-, R₃ étant choisi dans le groupe constitué de H, de COOH et des groupes (C₁-C₆)alkyles, linéaires ou ramifiés ; et
   . des groupes -C(=O)-NH-.

Une famille préférée de composés de l'invention est formée de composés répondant à la formule (II) susmentionnée, dans laquelle :
- R₁ est H ou représente un groupe A₁ de formule (1) telle que définie ci-dessus ;
- R₂ est un groupe OM ;
- n varie de 19 à 31 ;
- m varie de 3 à 10 ; et
- Z est choisi dans le groupe constitué des groupes -CHR₃-NH-, R₃ étant choisi dans le groupe constitué de H, de COOH et des groupes (C₁-C₆)alkyles, linéaires ou ramifiés.

Selon un mode de réalisation, dans la formule (II), n est égal à 19.

Selon un mode de réalisation, dans la formule (II), n est égal à 31.

Selon un mode de réalisation, dans la formule (II), m est égal à 3.

Selon un mode de réalisation, dans la formule (II), m est égal à 10.

Un groupe spécifique de composés selon l'invention est formé de composés de formule (II) telle que définie ci-dessus, dans laquelle n=19 et m=3.

Un autre groupe spécifique de composés selon l'invention est formé de composés de formule (II) telle que définie ci-dessus, dans laquelle n=31 et m=10.

Une famille préférée de composés de l'invention est formée de composés répondant à la formule (II) susmentionnée, dans laquelle :
- R₁ est H ou représente un groupe A₁ de formule (1) telle que définie ci-dessus ;
- R₂ est un groupe OM ;
- n varie de 19 à 31 ;
- m varie de 3 à 10 ; et
- Z est choisi dans le groupe constitué :
   . des groupes -CHR₃-NH-, R₃ étant choisi dans le groupe constitué de H, de COOH et des groupes (C₁-C₆)alkyles, linéaires ou ramifiés ; et
   . des groupes -C(=O)-NH-.

Une famille préférée de composés de l'invention est formée de composés répondant à la formule (II) susmentionnée, dans laquelle :
- R₁ est H ou représente un groupe A₁ de formule (1) telle que définie ci-dessus ;
- R₂ est un groupe OM ;
- n varie de 19 à 31 ;
- m varie de 3 à 10 ; et
- Z est choisi dans le groupe constitué des groupes -CHR₃-NH-, R₃ étant choisi dans le groupe constitué de H, de COOH et des groupes (C₁-C₆)alkyles, linéaires ou ramifiés.

Une famille préférée de composés de l'invention est formée de composés répondant à la formule (II) susmentionnée, dans laquelle :
- R₁ est H ou représente un groupe A₁ de formule (1) telle que définie ci-dessus ;
- R₂ est un groupe OM ;
- n varie de 19 à 31 ;
- m varie de 3 à 10 ; et
- Z est choisi dans le groupe constitué :
   . des groupes -CHR₃-NH-, R₃ étant choisi dans le groupe constitué de H et COOH ; et
   . des groupes -C(=O)-NH-.

De préférence, dans cette famille, n = 19 et m = 3 ou n = 31 et m = 10.

Une famille préférée de composés de l'invention est formée de composés répondant à la formule (II) susmentionnée, dans laquelle :
- R₁ est H ou représente un groupe A₁ de formule (1) telle que définie ci-dessus ;
- R₂ est un groupe OM ;
- n varie de 19 à 31 ;
- m varie de 3 à 10 ; et
- Z est choisi dans le groupe constitué des groupes -CHR₃-NH-, R₃ étant choisi dans le groupe constitué de H et COOH.

De préférence, dans cette famille, n = 19 et m = 3 ou n = 31 et m = 10.

Parmi les composés de formule (II) selon la présente invention, on peut mentionner en particulier les composés répondant à l'une des formules suivantes : 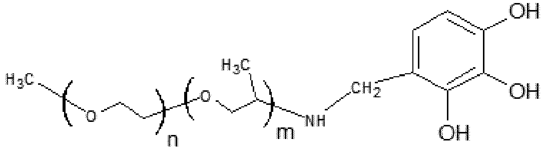 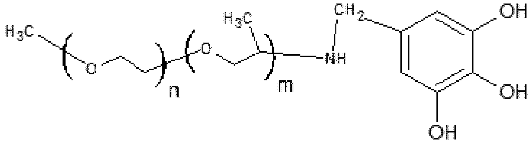 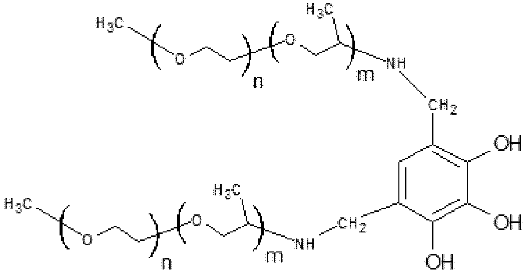 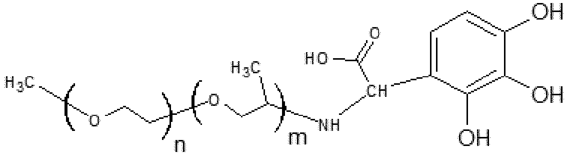 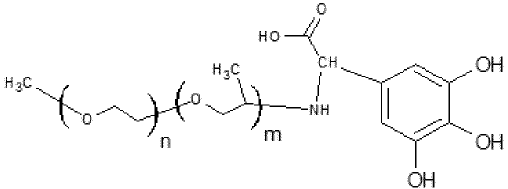 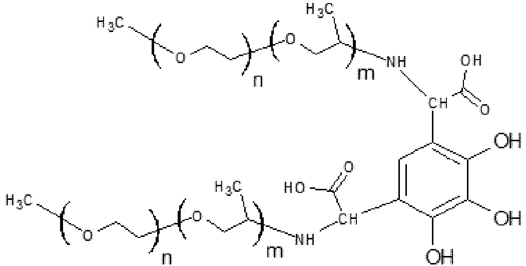 m et n étant tels que définis ci-dessus, et de préférence n = 19 et m = 3 ou n = 31 et m = 10.

Parmi les composés de formule (II) selon la présente invention, on peut mentionner en particulier les composés répondant à l'une des formules suivantes : 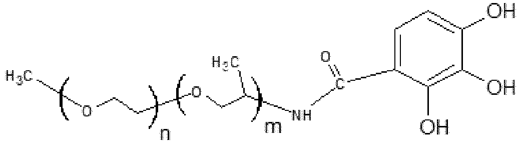 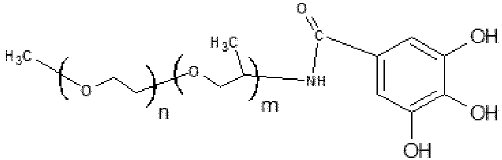 m et n étant tels que définis ci-dessus, et de préférence n = 19 et m = 3 ou n = 31 et m = 10.

Selon un mode de réalisation, les composés de l'invention sont des composés de formule (I) susmentionnée dans laquelle A représente un groupe A₂ de formule (2) et R₁ est choisi dans le groupe constitué de H et des groupes (C₁-C₄)alkyles, linéaires ou ramifiés.

Selon un mode de réalisation, les composés de l'invention répondent à la formule (III) suivante : 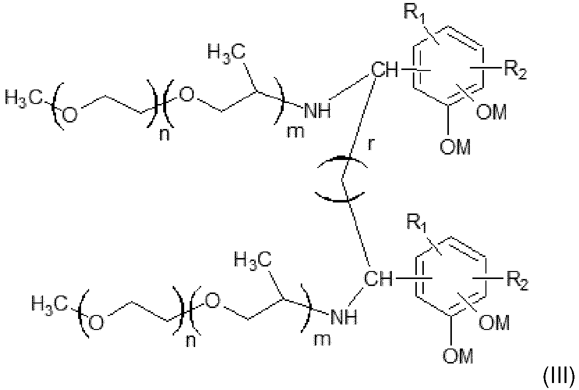 dans laquelle :
- R₁ est choisi dans le groupe constitué de H et des groupes (C₁-C₄)alkyles ; et
- M et R₂ sont tels que définis ci-dessus pour la formule (I), et
- n, m et r sont tels que définis ci-dessus pour la formule (2).

De préférence, dans la formule (III), n est un nombre entier allant de 1 à 31 et m est un nombre entier allant de 1 à 31.

Selon un mode de réalisation, dans la formule (III), R₂ est un groupe OM, M étant tel que défini ci-dessus.

De préférence, dans la formule (III), r est 0 ou varie de 1 à 3.

Selon un mode de réalisation, dans la formule (III), R₂ est un groupe OM, M étant tel que défini ci-dessus, et r est 0 ou varie de 1 à 3.

Selon un mode de réalisation, dans la formule (III), R₁ est H.

Un groupe préféré de composés selon l'invention est constitué de composés de formule (III) telle que définie ci-dessus, dans laquelle R₁ est H et R₂ est un groupe OM et r est 0 ou varie de 1 à 3, M étant tel que défini ci-dessus.

Selon un mode de réalisation, dans la formule (III), n est égal à 19.

Selon un mode de réalisation, dans la formule (III), n est égal à 31.

Selon un mode de réalisation, dans la formule (III), m est égal à 3.

Selon un mode de réalisation, dans la formule (III), m est égal à 10.

Selon un mode de réalisation, dans la formule (III), r est égal à 3.

Un groupe spécifique de composés selon l'invention est formé de composés de formule (III) telle que définie ci-dessus, dans laquelle n=19 et m=3.

Un autre groupe spécifique de composés selon l'invention est formé de composés de formule (III) telle que définie ci-dessus, dans laquelle n=31 et m=10.

Selon un mode de réalisation, les composés de l'invention sont des composés de formule (I) susmentionnée dans laquelle A représente un groupe A₃ de formule (3) et R₁ est choisi dans le groupe constitué de H et des groupes (C₁-C₄)alkyles, linéaires ou ramifiés.

Selon un mode de réalisation, les composés de l'invention répondent à la formule (IV) suivante : 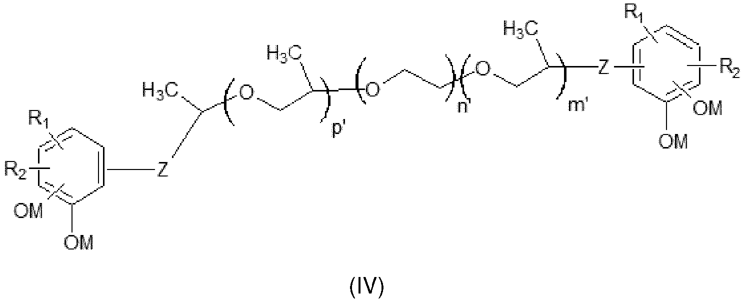 dans laquelle :
- R₁ est choisi dans le groupe constitué de H et des groupes (C₁-C₄)alkyles ; et
- M et R₂, n', m' et p' sont tels que définis ci-dessus pour la formule (I), et
- n', m' et p' sont tels que définis ci-dessus pour la formule (3).

De préférence, dans la formule (IV), n'est un nombre entier allant de 1 à 39.

Selon un mode de réalisation, dans la formule (IV), R₂ est un groupe OM, M étant tel que défini ci-dessus.

Selon un mode de réalisation, dans la formule (IV), R₂ est un groupe OM, M étant tel que défini ci-dessus, et r est 0 ou varie de 1 à 3.

Selon un mode de réalisation, dans la formule (IV), Z est choisi dans le groupe constitué :
. des groupes -CHR₃-NH-, R₃ étant choisi dans le groupe constitué de H, de COOH et des groupes (C₁-C₆)alkyles, linéaires ou ramifiés ; et
. des groupes -C(=O)-NH-.

Selon un mode de réalisation, dans la formule (IV), Z est choisi dans le groupe constitué des groupes -CHR₃-NH-, R₃ étant choisi dans le groupe constitué de H, de COOH et des groupes (C₁-C₆)alkyles, linéaires ou ramifiés.

Selon un mode de réalisation, dans la formule (IV), Z est choisi dans le groupe constitué :
. des groupes -CHR₃-NH-, R₃ étant choisi dans le groupe constitué de H et de COOH ; et
. des groupes -C(=O)-NH-.

Selon un mode de réalisation, dans la formule (IV), Z est choisi dans le groupe constitué des groupes -CHR₃-NH-, R₃ étant choisi dans le groupe constitué de H et de COOH.

Une famille préférée de composés de l'invention est formée de composés répondant à la formule (IV) susmentionnée, dans laquelle :
- R₂ est un groupe OM ; et
- Z est choisi dans le groupe constitué :
   . des groupes -CHR₃-NH-, R₃ étant choisi dans le groupe constitué de H, de COOH et des groupes (C₁-C₆)alkyles, linéaires ou ramifiés ; et
   . des groupes -C(=O)-NH-.

Une famille préférée de composés de l'invention est formée de composés répondant à la formule (IV) susmentionnée, dans laquelle :
- R₂ est un groupe OM ; et
- Z est choisi dans le groupe constitué des groupes -CHR₃-NH-, R₃ étant choisi dans le groupe constitué de H, de COOH et des groupes (C₁-C₆)alkyles, linéaires ou ramifiés.

De préférence, dans la formule (IV) susmentionnée, R₁ est H.

Une famille préférée de composés de l'invention est formée de composés répondant à la formule (IV) susmentionnée, dans laquelle :
- R₁ est H ;
- R₂ est un groupe OM ; et
- Z est choisi dans le groupe constitué :
   . des groupes -CHR₃-NH-, R₃ étant choisi dans le groupe constitué de H, de COOH et des groupes (C₁-C₆)alkyles, linéaires ou ramifiés ; et
   . des groupes -C(=O)-NH-.

Une famille préférée de composés de l'invention est formée de composés répondant à la formule (IV) susmentionnée, dans laquelle :
- R₁ est H ;
- R₂ est un groupe OM ; et
- Z est choisi dans le groupe constitué des groupes -CHR₃-NH-, R₃ étant choisi dans le groupe constitué de H, de COOH et des groupes (C₁-C₆)alkyles, linéaires ou ramifiés.

Une famille préférée de composés de l'invention est formée de composés répondant à la formule (IV) susmentionnée, dans laquelle :
- R₁ est H ;
- R₂ est un groupe OM ; et
- Z est choisi dans le groupe constitué :
   . des groupes -CHR₃-NH-, R₃ étant choisi dans le groupe constitué de H et de COOH ; et
   . des groupes -C(=O)-NH-.

Une famille préférée de composés de l'invention est formée de composés répondant à la formule (IV) susmentionnée, dans laquelle :
- R₁ est H ;
- R₂ est un groupe OM ; et
- Z est choisi dans le groupe constitué des groupes -CHR₃-NH-, R₃ étant choisi dans le groupe constitué de H et de COOH.

Parmi les composés de formule (IV) selon la présente invention, on peut mentionner en particulier les composés répondant à la formule suivante : 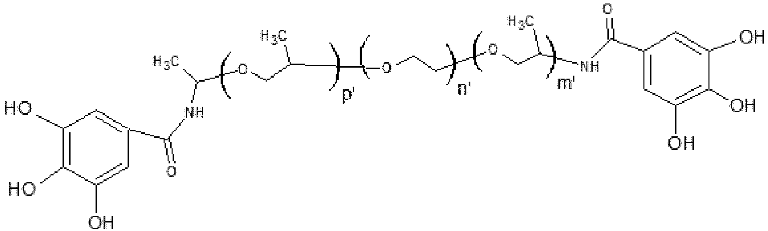 n', m' et p' étant tels que définis ci-dessus.

La présente invention concerne également l'utilisation d'un composé tel que défini ci-dessus, répondant à la formule (I), ou à l'une des formules (II), (III) ou (IV), comme agent chélatant des ions chargés positivement, notamment choisis dans le groupe constitué des ions alcalins, des ions alcalino-terreux et des ions de métaux de transition, et plus particulièrement comme agent chélatant des ions calcium, magnésium, manganèse, fer, nickel ou cobalt.

La présente invention concerne également l'utilisation d'un composé tel que défini ci-dessus, répondant à la formule (I), ou à l'une des formules (II), (III) ou (IV), comme agent fluidifiant pour des compositions hydrauliques.

La présente invention concerne également l'utilisation d'un composé tel que défini ci-dessus, répondant à la formule (I), ou à l'une des formules (II), (III) ou (IV), pour l'adjuvantation des liants hydrauliques.

La présente invention concerne également l'utilisation d'un composé tel que défini ci-dessus, répondant à la formule (I), ou à l'une des formules (II), (III) ou (IV), pour l'adjuvantation des liants hydrauliques, seul ou en combinaison avec au moins un plastifiant et/ou superplastifiant.

Dans le cadre de la présente invention, on entend par le terme « liant hydraulique » tout composé ayant la propriété de s'hydrater en présence d'eau et dont l'hydratation permet d'obtenir un solide ayant des caractéristiques mécaniques, notamment un ciment tel qu'un ciment Portland, ciment alumineux, ciment pouzzolanique ou encore un sulfate de calcium anhydre ou semi-hydraté. Le liant hydraulique peut être un ciment selon la norme EN197-1 (2001) et notamment un ciment Portland, des additions minérales, notamment laitiers, ou un ciment comprenant des additions minérales.

L'expression « additions minérales » désigne les laitiers (tels que définis dans la norme Ciment NF EN 197-1(2012) paragraphe 5.2.2), les laitiers d'aciérie, les matériaux pouzzolaniques (tels que définis dans la norme Ciment NF EN 197-1 (2012) paragraphe 5.2.3), les cendres volantes (telles que définies dans la norme Ciment NF EN 197-1(2012) paragraphe 5.2.4), les schistes calcinés (tels que définis dans la norme Ciment NF EN 197-1(2012) paragraphe 5.2.5), les calcaires (tels que définis dans la norme Ciment NF EN 197-1(2012) paragraphe 5.2.6) ou encore les fumées de silices (telles que définies dans la norme Ciment NF EN 197-1(2012) paragraphe 5.2.7) ou leurs mélanges. D'autres ajouts, non actuellement reconnus par la norme Ciment NF EN 197-1(2012), peuvent aussi être utilisés. Il s'agit notamment des métakaolins, tels que les métakaolins de type A conformes à la norme NF P 18-513 (août 2012), des additions siliceuses, telles que les additions siliceuses de minéralogie Qz conformes à la norme NF P 18-509 (septembre 2012), des aluminosilicates notamment de type géopolymères inorganiques.

Les composés de l'invention peuvent être utilisés dans l'adjuvantation des liants hydrauliques en combinaison de plastifiants et/ou superplastifiants dans un mélange entre 1% et 99%.

Parmi ces plastifiants et/ou superplastifiants, parmi ceux bien connus du domaine technique, on peut citer par exemple les polycarboxylates de polyoxyalkylène (PCP) ou encore les mono-chaînes poly(oxyde d'éthylène) bis-phosphonates décrits dans le brevet FR 2 696 736, et commercialisés par la Société CHRYSO sous le nom de CHRYSO^{®}Fluid Optima 100.

De préférence, les composés de l'invention sont utilisés en combinaison de l'Optima 100 susmentionné, dans un mélange entre 1% et 99% en Optima 100, et notamment entre 25% et 75%.

De préférence, les composés de l'invention sont utilisés en combinaison d'un PCP dans un mélange entre 1 et 99% en PCP, et notamment entre 25% et 75%.

La présente invention concerne également l'utilisation d'un composé tel que défini ci-dessus, répondant à la formule (I), ou à l'une des formules (II), (III) ou (IV) pour diminuer la sensibilité aux argiles phyllosilicates d'une composition hydraulique.

La présence d'argile phyllosilicate dans un sable, de préférence les montmorillonites, encore plus préférentiellement les montmorillonites de sodium, peut affecter fortement l'ouvrabilité des compositions de liant hydraulique, notamment des compositions de béton. En effet, la structure en feuillets des argiles favorise l'absorption de l'eau et l'intercalation des éléments contenus dans les compositions de liant hydraulique, tels que par exemple les superplastifiants. Le dosage de la quantité d'argile se fait, généralement, par l'essai au bleu de méthylène (*Norme NF EN 933-9).*

Ces phénomènes provoquent une augmentation de la viscosité de la pâte de liant hydraulique, et donc une perte d'ouvrabilité. Un surdosage en fluidifiant est alors nécessaire pour pallier sa consommation par les argiles et maintenir les performances désirées. Un fluidifiant permet de diminuer la sensibilité aux argiles phyllosilicates d'une composition hydraulique lorsque l'augmentation de son dosage pour être à iso-étalement est la plus faible possible, par exemple entre 0% et 20%, lorsque le taux en argile phyllosilicate varie.

La présente invention concerne également l'utilisation d'un composé tel que défini ci-dessus, répondant à la formule (I), ou à l'une des formules (II), (III) ou (IV) pour diminuer la sensibilité aux sulfates alcalins en solution d'une composition hydraulique.

Les sulfates alcalins en solution sont des compétiteurs pour l'adsorption des fluidifiants sur les grains de ciments. La quantification du taux de sulfates alcalins en solution se fait par la méthode décrite dans « Techniques et méthodes des laboratoires des ponts et chaussées, Méthode d'essai ME48 - 4p - 1997 ». Le dosage en fluidifiant est donc dépendant du taux en sulfates alcalins en solution et plus ce taux est élevé plus le dosage en fluidifiant sera élevé pour obtenir les mêmes performances cibles. Un fluidifiant permet de diminuer la sensibilité aux sulfates alcalins en solution d'une composition hydraulique lorsque l'augmentation de son dosage pour être à iso-étalement est la plus faible possible, par exemple entre 0% et 20%, lorsque le taux de sulfates alcalins en solution varie, par exemple celui-ci passe d'un niveau considéré bas (inférieur à 0,2% en poids de ciment) à un niveau élevé (supérieur à 0,6% en poids de ciment).

L'invention concerne également l'utilisation d'un composé tel que défini ci-dessus, répondant à la formule (I), ou à l'une des formules (II), (III) ou (IV), pour la préparation d'une composition hydraulique comprenant :
- un composé tel que défini ci-dessus, répondant à la formule (I), ou à l'une des formules (II), (III) ou (IV),
- au moins un liant hydraulique (par exemple un liant hydraulique, ou deux liants hydrauliques pour les systèmes binaires ou trois liants hydrauliques pour les systèmes ternaires),
- au moins un granulat, et
- de l'eau.

Les compositions hydrauliques peuvent notamment être du béton, du mortier, une chape ou un coulis.

Les compositions hydrauliques sont préparées de façon classique par mélange des constituants susmentionnés. L'invention concerne également le procédé de préparation d'une composition hydraulique comprenant l'étape de mélange :
- d'un composé tel que défini ci-dessus,
- d'au moins un liant hydraulique,
- d'au moins un granulat, et
- d'eau,

Les composants étant ajoutés dans un ordre quelconque.

Le composé selon l'invention peut être ajouté aux autres composants de la composition hydraulique à sec (généralement en poudre) ou en solution, de préférence en solution aqueuse.

Ainsi, selon un autre aspect, l'invention concerne un fluidifiant (ou plastifiant) pour compositions hydrauliques comprenant le composé tel que défini ci-dessus en solution dans un solvant, notamment en solution aqueuse, de préférence de 5% à 50% en poids de composé, notamment de 10% à 30% en poids, en particulier de l'ordre de 20% en poids par rapport au poids total de la solution. L'eau de ladite solution aqueuse peut notamment être l'eau de pré mouillage. Par « eau de pré mouillage », on entend une partie de l'eau totale, qui sert à humidifier les granulats avant le gâchage permettant de simuler l'état hygrométrique des granulats, souvent humide, dans une usine à béton ou sur le chantier. Ladite solution aqueuse comprenant le composé peut éventuellement comprendre d'autres additifs, par exemple un agent anti-mousse, un additif anti-entraînement d'air, un accélérateur ou retardateur de prise, un agent modificateur de rhéologie, un autre fluidifiant (plastifiant ou superplastifiant) et/ou tout autre additif classiquement utilisé dans les compositions hydrauliques. Dans un mode de réalisation préféré, ladite solution aqueuse comprenant le polymère comprend un fluidifiant, notamment un superplastifiant, par exemple un superplastifiant CHRYSO^{®} Fluid Premia 180 ou CHRYSO^{®} Fluid Premia 196.

Dans le cadre de la présente invention, on entend par « ciment » un ciment selon la norme EN 197-1 (2001) et notamment un ciment de type CEM I, CEM II, CEM III, CEM IV ou CEM V selon la norme Ciment NF EN 197-1 (2012). Le ciment peut comprendre des additions minérales.

Par « granulats », on entend un ensemble de grains minéraux de diamètre moyen compris entre 0 et 125 mm. Selon leur diamètre, les granulats sont classés dans l'une des six familles suivantes : fillers, sablons, sables, graves, gravillons et ballast (norme XP P 18-545). Les granulats les plus utilisés sont les suivants :
- les fillers, qui ont un diamètre inférieur à 2 mm et pour lesquels au moins 85% des granulats ont un diamètre inférieur à 1,25 mm et au moins 70% des granulats ont un diamètre inférieur à 0,063 mm,
- les sables de diamètre compris entre 0 et 4 mm (dans la norme NF EN 13-242, le diamètre pouvant aller jusqu'à 6 mm),
- les graves de diamètre supérieur à 6,3 mm,
- les gravillons de diamètre compris entre 2 et 63 mm.

Les sables sont donc compris dans la définition de granulat selon l'invention.

Les fillers peuvent notamment être d'origine calcaire ou dolomitique.

Lors de l'étape de mélange, d'autres additifs peuvent être ajoutés, par exemple une addition minérale et/ou des additifs, par exemple un additif anti-entraînement d'air, un agent antimousse, un accélérateur ou retardateur de prise, un agent modificateur de rhéologie, un autre fluidifiant (plastifiant ou superplastifiant), notamment un superplastifiant, par exemple un superplastifiant CHRYSO^{®} Fluid Premia 180 ou CHRYSO^{®} Fluid Premia 196.

Généralement, 0,1% à 1% en poids sec de composé selon l'invention sont utilisés dans la composition hydraulique.

La présente invention concerne également un fluidifiant pour composition hydraulique comprenant un composé tel que défini ci-dessus, répondant à la formule (I), ou à l'une des formules (II), (III) ou (IV).

La présente invention concerne également une composition hydraulique, notamment choisie parmi les bétons, mortiers, chapes et coulis, comprenant :
- un composé tel que défini ci-dessus, répondant à la formule (I), ou à l'une des formules (II), (III) ou (IV),
- au moins un liant hydraulique,
- au moins un granulat, et
- de l'eau.

La composition hydraulique peut comprendre en outre les additifs susmentionnés.

### EXEMPLES

### PARTIE 1 - SYNTHÈSE DES COMPOSÉS

Le pyrogallol, l'acide gallique, le formol et l'acide glyoxylique ont été obtenus chez SIGMA ALDRICH.

Les Jeffamine^{®} M2070, M1000 et ED 600 ont été obtenus chez HUNTSMAN.

La Chaine HPLC :
- Thermo Scientific, UHPLC Ultimate 3000, équipée du logiciel Chroméléon 7.2
- Colonne : Thermo Scientific, Acclaim Carbonyl C18, Dimension : 4.6 x 150 mm, Diamètre : 120 Å ; 5 µm
- Détecteurs : DEDL : SEDEX LC LT ELCD ; UV : UHPLC Ultimate 3000.

### Exemple 1 : Synthèse d'une structure représentative 1 :

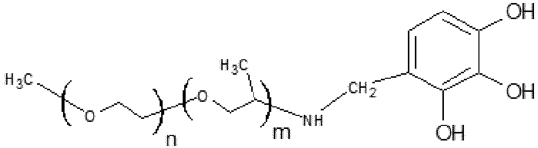

avec n = 31 et m = 10

Dans un ballon tricol muni d'un réfrigérant, la solution de formol à 37% (1 équivalent ; 0,03mol ; 2,4g) est ajoutée goutte à goutte à une solution de Jeffamine^{®} M2070 (1 équivalent ; 0,03mol ; 62,1g) dans 60 ml d'eau. Le milieu réactionnel est agité à température ambiante pendant 1h. Le pyrogallol (1 équivalent ; 0,03mol ; 3,78g) est ajouté au milieu réactionnel et la température est portée à 60°C jusqu'à disparition du pyrogallol (suivi par HPLC).

### Exemple 2 : Synthèse d'une structure représentative 2 :

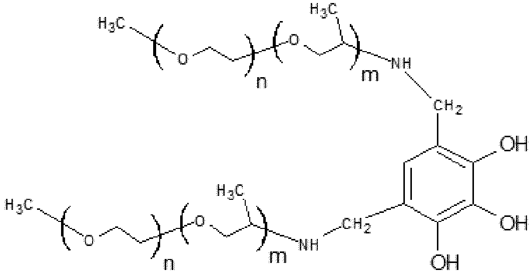

avec n = 19 et m = 3

Dans un ballon tricol muni d'un réfrigérant, la solution de formol à 37% (2 équivalents ; 0,06mol ; 4,8g) est ajoutée goutte à goutte à une solution de Jeffamine^{®} M1000 (2 équivalents ; 0,06mol ; 62,1g) dans 100 ml d'eau. Le milieu réactionnel est agité à température ambiante pendant 1h. Le pyrogallol (1 équivalent ; 0,03mol ; 3,78g) est ajouté au milieu réactionnel et la température est portée à 60°C jusqu'à disparition du pyrogallol (suivi par HPLC).

### Exemple 3 : Synthèse d'une structure représentative 3 :

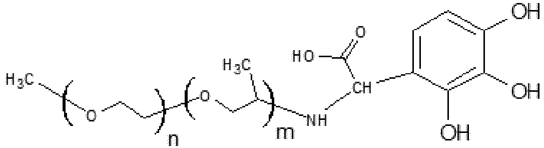

avec n = 19 et m = 3

Dans un ballon triicol muni d'un réfrigérant, la solution d'acide glyoxylique à 50% (1 équivalent ; 0,03mol ; 4,42g) est ajoutée goutte à goutte à une solution de Jeffamine^{®} M2070 (1 équivalent ; 0,03mol ; 62,1g) dans 60 ml d'eau. Le milieu réactionnel est agité à température ambiante pendant 1h. Le pyrogallol (1 équivalent ; 0,03mol ; 3,78g) est ajouté au milieu réactionnel et la température est portée à 60°C jusqu'à disparition du pyrogallol (suivi par HPLC).

### Exemple 4 : Synthèse d'une structure représentative 4 :

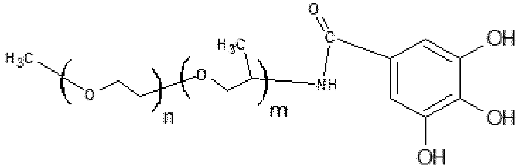

avec n = 19 et m = 3

Dans un ballon quadricol muni d'un Dean Stark et d'un réfrigérant, la Jeffamine^{®} M1000 (1,1 équivalents ; 0,194 mol ; 193,98 g) ainsi que l'acide gallique (1 équivalent ; 0,176 mol ; 30 g) sont introduits. Le milieu réactionnel est porté à 160°C sous vide et agité jusqu'à disparition du pyrogallol (suivi par HPLC).

### Exemple 5 : Synthèse d'une structure représentative 5 :

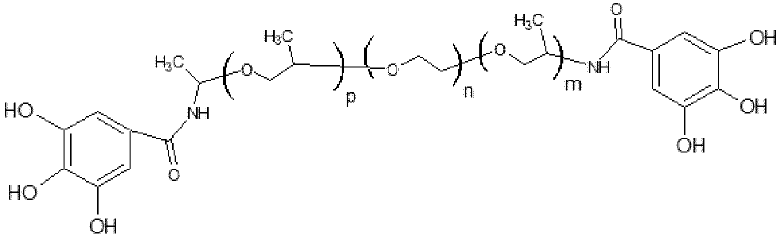

avec n = 9 et m + p = 3,6

Dans un ballon quadricol muni d'un Dean Stark, d'un réfrigérant, la Jeffamine^{®} ED-600 (1,1 équivalents ; 0,194 mol ; 116,39 g) ainsi que l'acide gallique (1 équivalent ; 0,176 mol ; 30 g) sont introduits. Le milieu réactionnel est porté à 160°C sous vide et agité jusqu'à disparition du pyrogallol (suivi par HPLC).

### PARTIE 2 - APPLICATIONS

Le sable standardisé AFNOR est introduit dans le bol d'un malaxeur PERRIER. Après malaxage du sable pendant 30s à 140 tour/min, l'eau de préhumidifcation est introduite dans le bol en 15s. Le volume de cette eau représente un tiers du volume total d'eau efficace à ajouter. Le malaxage est continué pendant 15s et le sable préhumidifié est laissé au repos pendant 4 min 30. Ensuite, le ciment et le filler calcaire (origine : ERBRAY) sont ajoutés au sable préhumidifié et l'ensemble est malaxé à 140 tour/min pendant 1 min avant introduction du reste de l'eau totale efficace et la totalité de l'adjuvant sur 30s. Le malaxeur est stoppé pour racler les bords du bol pour avoir un mortier homogène puis le malaxage est repris pendant 1min à 280 tour/min.

La réduction d'eau initiale et le maintien d'ouvrabilité sont obtenus en mesurant le diamètre de l'étalement obtenu en accord avec la procédure suivante :
Un moule reproduisant le cône d'Abrahams à une échelle un demi est rempli avec le mortier. Afin d'obtenir l'étalement, ce cône est soulevé à 90° de la plaque en effectuant un quart de tour. L'étalement est mesuré à 5, 30, 60 et 90 minutes sur deux diamètres à 90° l'un de l'autre avec une règle. La mesure indiquée est alors la moyenne des deux étalements avec une incertitude de ± 10mm.

Les essais sont faits à 20°C.

Le dosage en adjuvant est déterminé pour avoir un étalement initial compris entre 290 et 310 mm. Ce dosage est exprimé en poids par rapport au poids total du liant (ciment + filler).

Les compositions chimiques utilisées dans les études applicatives sont explicitées ci-après.

**Tableau 1 : Composition chimique des compositions**

| Composant | Composition 1 | Composition 3 |
|---|---|---|
| Exemple 1 | 30% | |
| Exemple 3 | | 30% |
| Antimousse | 0,3% | 0,3% |
| Eau | 69,7% | 69,7% |

### Exemple 6 : Comparaison avec une référence sans adjuvant

**Tableau 2 : Composition hydraulique**

| Composant | Masse (g) |
|---|---|
| CEM I 52,5N Le Teil | 555,1 |
| Filler Erbray | 237,9 |
| Sable AFNOR | 1 350 |
| Adjuvant | à caler |
| Eau efficace | 277,5 |

Les résultats sont regroupés dans le tableau 3 ci-après concernant l'étalement en mm en fonction du temps en minutes.

| | **Sans adjuvant** | **Composition 1** | **Composition 3** |
|---|---|---|---|
| **E.S théo (%)** | 30,0% | 30,3% | 30,3% |
| **E.S réel (%)** | 29,54% | 30,23% | 30,15% |
| **dosage (% liant total)** | | **1,25%** | **0,80%** |
| **Taux sulfates alcalins en solution** | **0,11%** | **0,11%** | **0,11%** |
| **Eau efficace (g)** | 277,5 | 277,5 | 277,5 |
| **Eau d'ajout (g)** | 277,5 | 270,6 | 273,1 |
| **ETALEMENT (mm)** | | | |
| **T5** | 150 | 300 | 290 |
| **T30** | Non mesuré | 190 | 180 |
| **T60** | Non mesuré | 170 | 155 |
| **T90** | Non mesuré | 150 | Non mesuré |

Comme observé, les composés selon l'invention possèdent un pouvoir fluidifiant. En effet, à volume d'eau ajouté égal, l'étalement initial est double avec l'utilisation des deux structures des exemples 1 et 3.

### Exemple 7 : Comparaison avec une référence CHRYSO^{®}Fluid Optima 100

**Tableau 4 : Composition hydraulique**

| Composant | Masse (g) |
|---|---|
| CEM I 52,5N Le Teil | 615 |
| Filler Erbray | 265 |
| Sable AFNOR | 1 350 |
| Adjuvant | à caler |
| Eau efficace | 303 |

Les résultats sont regroupés dans le tableau 5 ci-après concernant l'étalement en mm en fonction du temps en minutes.

| | **CHRYSO^{®}Fluid Optima 100** | **Composition 1** | **Composition 3** |
|---|---|---|---|
| **E.S théo (%)** | 30,0% | 30,3% | 30,3% |
| **E.S réel (%)** | 29,54% | 30,23% | 30,15% |
| **dosage (% liant total)** | **1,25%** | **1,20%** | **0,80%** |
| **Taux sulfates alcalins en solution** | **0,11%** | **0,11%** | **0,11%** |
| **Eau efficace (g)** | 303 | 303 | 303 |
| **Eau d'ajout (g)** | 286,3 | 295,6 | |
| **ETALEMENT (mm)** | | | |
| **T5** | 300 | 295 | 310 |
| **T30** | 370 | 210 | 210 |
| **T60** | 380 | 180 | 190 |
| **T90** | 400 | 160 | 170 |
| **T120** | 405 | Non mesuré | 150 |

Comme observé, les composés de l'invention possèdent un pouvoir fluidifiant supérieur à celui de CHRYSO^{®}Fluid Optima 100. En effet, à volume d'eau ajouté égal, les engagements en matière active pour atteindre le même étalement initial sont inférieurs à l'Optima 100.

### Exemple 8 : Co-adjuvantation avec CHRYSO^{®}Fluid Optima 100

**Tableau 6 : Composition hydraulique**

| Composant | Masse (g) |
|---|---|
| CEM I 52,5N Le Teil | 555,1 |
| Filler Erbray | 237,9 |
| Sable AFNOR | 1 350 |
| Adjuvant | à caler |
| Eau efficace | 277,5 |

Les résultats sont regroupés dans le tableau 7 ci-après concernant l'étalement en mm en fonction du temps en minutes.

| | **CHRYSO^{®}Fluid Optima 100** | **CHRYSO^{®}Fluid Optima 100 + Composition 1** |
|---|---|---|
| **dosage (% liant total)** | **0,70%** | **0,3% de CHRYSO^{®}Fluid Optima 100 + 0,3% de Composition 1** |
| **E.S théo (%)** | 30,0% | 30,0% |
| **E.S réel (%)** | 29,54% | 29,54% |
| **Taux sulfates alcalins en solution** | 0,11% | 0,11% |
| **Eau efficace (g)** | 277,5 | 277,5 |
| **Eau d'ajout (g)** | 273,6 | 273,6 |
| **ETALEMENT (mm)** | | |
| **T5** | 310 | 290 |
| **T30** | 315 | 210 |
| **T60** | 315 | 240 |
| **T90** | 320 | 250 |
| **T120** | 340 | 250 |
| **T150** | 340 | 250 |
| **T180** | 360 | Non mesuré |

Comme observé, l'utilisation d'un composé selon l'invention (exemple 1) en combinaison de CHRYSO^{®}Fluid Optima 100, permet d'obtenir un pouvoir fluidifiant supérieur tout en conservant un maintien d'ouvrabilité intéressant. En effet, à volume d'eau ajoutée égal, l'étalement cible est atteint avec un engagement en matière active moins importante pour le mélange que pour CHRYSO^{®}Fluid Optima 100 seul.

Le tableau 8 ci-après regroupe les résultats des propriétés mécaniques. Les mesures des résistances mécaniques à la flexion et à la compression sont faites selon la norme NF EN 196-1.

| **Résistances mécaniques (Mpa)** | **CHRYSO^{®}Fluid Optima 100** | **CHRYSO^{®}Fluid Optima 100 + Composition 1** |
|---|---|---|
| **Rf 24h** | 3,3 | 5,1 |
| **Rc 24h** | 13,3 | 23,9 |

Il est également observé une forte augmentation des résistances à la flexion (Rf) et à la compression (Rc) après 24h ce qui est une performance recherchée dans le domaine d'application.

### Exemple 9 : Etude de la robustesse aux alcalins

**Tableau 9 : Composition hydraulique**

| Composant | Masse (g) |
|---|---|
| CEM I 52,5N Le Teil | 555,1 |
| Filler Erbray | 237,9 |
| Sable AFNOR | 1 350 |
| Adjuvant | à caler |
| Eau efficace | 277,5 |

| | **CHRYSO^{®}Fluid Optima 100** | **CHRYSO^{®}Fluid Optima 100** | **Composition 1** | **Composition 1** |
|---|---|---|---|---|
| **E.S théo (%)** | 30,0% | 30,0% | 30,0% | 30,0% |
| **E.S réel (%)** | 29,54% | 29,54% | 30,23% | 30,23% |
| **dosage (% liant total)** | **0,70%** | **1,05%** | **1,25%** | **1,25%** |
| **Taux alcalins sulfate en solution** | **0,11%** | **0,60%** | **0,11%** | **0,60%** |
| **Eau efficace (g)** | 277,5 | 277,5 | 277,5 | 277,5 |
| **Eau d'ajout (g)** | 273,6 | 271,6 | 270,6 | 270,6 |
| **ETALEMENT (mm)** | | | | |
| **T5** | 310 | 300 | 300 | 320 |
| **T30** | 315 | 270 | 190 | 270 |
| **T60** | 315 | 270 | 170 | 240 |
| **T90** | 320 | 280 | 150 | 210 |
| **T120** | 340 | 285 | - | 180 |
| **T150** | 340 | 300 | | 155 |

Comme observé, l'utilisation d'un composé selon l'invention permet d'obtenir une robustesse au taux de sulfates alcalins en solution du pouvoir fluidifiant contrairement à la référence CHRYSO^{®}Fluid Optima 100. En effet, à volume d'eau ajoutée égal, le dosage de CHRYSO^{®}Fluid Optima 100 augmente de 50% pour obtenir le même étalement initial lorsque le taux d'alcalin soluble augmente alors qu'il reste identique pour le composé de l'invention.

| **Résistances mécaniques (Mpa)** | **CHRYSO^{®} Fluid Optima 100** | **CHRYSO^{®} Fluid Optima 100** | **Composition 1** | **Composition 1** |
|---|---|---|---|---|
| **Rf 24h** | 3,3 | 3,8 | 4,7 | 5,2 |
| **Rc 24h** | **13,3** | **14,5** | **24,4** | **30,7** |

Il est également observé une forte augmentation des résistances à la flexion et à la compression après 24h ce qui est une performance recherchée dans le domaine d'application.

### Exemple 10 : Exemple comparatif par rapport aux composés de WO 2009/112647

Le composé de formule ci-dessous a été préparé :

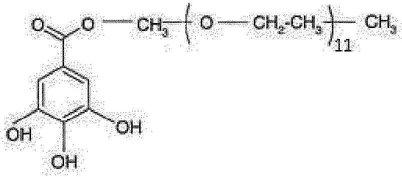

Dans un ballon tricol muni d'un réfrigérant, le MPEG 500 (1,1 équivalent, 0,13 mol, 60,0g), l'acide gallique (1 équivalent, 0,12 mol, 21,2g) et l'acide paratoluène sulfonique (3,0g) sont ajoutés et chauffé à 130°C sous vide jusqu'à disparition de l'acide gallique (suivi par HPLC).

### Etude de stabilité à pH = 13

Afin de comparer la stabilité de cette molécule dans le milieu alcalin du béton, les composés de l'exemple 1 et de l'exemple comparatif 10 ont été mis en solution à pH = 13 et leur dégradation a été suivie par HPLC.

D'après les chromatogrammes obtenus, il n'y a aucune évolution du pic correspondant au composé de l'exemple 1 dans les conditions d'étude alors qu'il est observé une forte diminution du pic correspondant au composé de l'exemple 10 (comparatif). Ces pics étant représentatifs de la concentration en molécule dans le milieu, l'instabilité de la structure selon la demande WO 2009/112647 est démontrée en comparaison des structures selon l'invention.

## Revendications

1. Composé de formule (I) suivante : 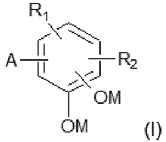 dans laquelle :
• M est choisi dans le groupe constitué de H, des métaux alcalins et alcalino-terreux et des groupes ⁺HNRR', R et R' étant choisis indépendamment l'un de l'autre parmi H, les (C₁-C₃)alkyles, linéaires ou ramifiés, et les alcools en C₁-C₃, linéaires ou ramifiés ;
• R₁ est choisi dans le groupe constitué de H, A₁ et des groupes (C₁-C₄)alkyles, linéaires ou ramifiés, lorsque A répond à la formule (1) ci-après, ou, lorsque A répond à la formule (2) ou (3) ci-dessous, R₁ est choisi dans le groupe constitué de H et des groupes (C₁-C₄)alkyles, linéaires ou ramifiés ;
• R₂ est choisi dans le groupe constitué de H, OM, M étant tel que défini ci-dessus et des groupes (C₁-C₄)alkyles, linéaires ou ramifiés ;
• A représente :
* un groupe A₁ de formule (1) suivante : 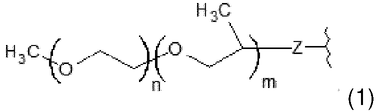 dans laquelle :
- n est un nombre entier allant de 1 à 40, de préférence de 1 à 31 ;
- m est un nombre entier allant de 1 à 40, de préférence de 1 à 31 ; et
- Z est choisi dans le groupe constitué :
. des groupes -CHR₃-NH-, R₃ étant choisi dans le groupe constitué de H, de COOH et des groupes (C₁-C₆)alkyles, linéaires ou ramifiés ;
. des groupes -C(=O)-NH- ; et
. des groupes -C(R₅)=N-, R₅ étant H ou Me ;
* un groupe A₂ de formule (2) suivante : 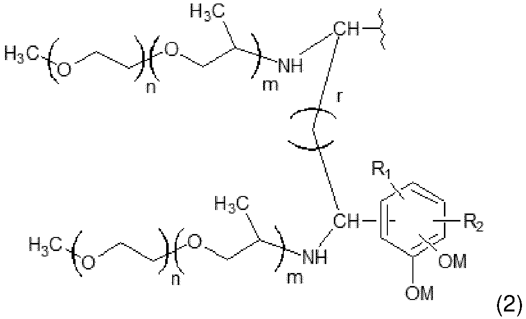 dans laquelle :
- n est un nombre entier allant de 1 à 40, de préférence de 1 à 31 ;
- m est un nombre entier allant de 1 à 40, de préférence de 1 à 31 ;
- r est 0 ou un nombre entier allant de 1 à 6 ; et
- M, R₁ et R₂ sont tels que définis ci-dessus dans la formule (I) ;
* un groupe A₃ de formule (3) suivante : 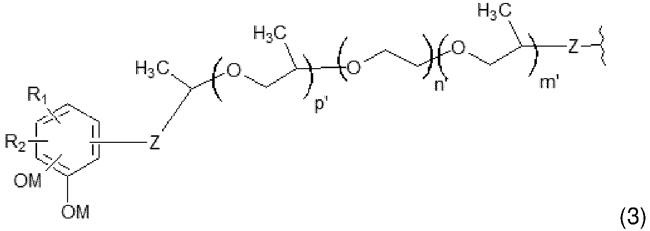 dans laquelle :
- n' est un nombre entier allant de 1 à 50, de préférence de 1 à 39 ;
- la somme m'+p' varie de 1 à 6 ;
- m' est un nombre entier allant de 1 à 5 ;
- p' est un nombre entier allant de 1 à 5 ; et
- M, R₁ et R₂ sont tels que définis ci-dessus dans la formule (I) ;
- Z est tel que défini ci-dessus dans la formule (1).

2. Composé selon la revendication 1, répondant à la formule (II) suivante : 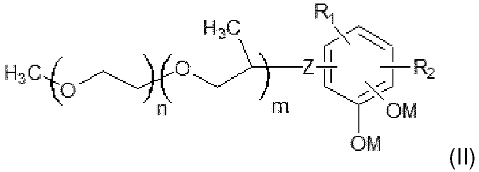 dans laquelle :
- R₁ est choisi dans le groupe constitué de H et des groupes (C₁-C₄)alkyles, ou représente un groupe A₁ de formule (1) telle que définie dans la revendication 1 ; et
- M, R₂, n, m sont tels que définis dans la revendication 1.

3. Composé de formule (II) selon la revendication 2, dans laquelle :
- R₂ est un groupe OM ;
- n varie de 19 à 31 ;
- m varie de 3 à 10 ; et
- Z est choisi dans le groupe constitué :
. des groupes -CHR₃-NH-, R₃ étant choisi dans le groupe constitué de H, de COOH et des groupes (C₁-C₆)alkyles, linéaires ou ramifiés ; et
. des groupes -C(=O)-NH-.

4. Composé de formule (II) selon la revendication 3, dans laquelle R₁ est H ou représente un groupe A₁ de formule (1) telle que définie dans la revendication 1.

5. Composé selon la revendication 1, répondant à la formule (III) suivante : 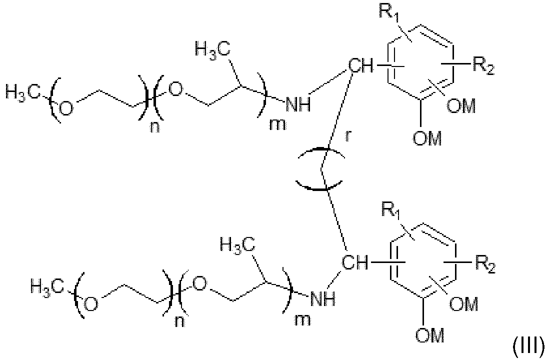 dans laquelle :
- R₁ est choisi dans le groupe constitué de H et des groupes (C₁-C₄)alkyles ; et
- M, R₂, n, m et r sont tels que définis dans la revendication 1.

6. Composé de formule (III) selon la revendication 5, dans laquelle R₁ est H et R₂ est un groupe OM et r est 0 ou varie de 1 à 3.

7. Composé selon la revendication 1, répondant à la formule (IV) suivante : 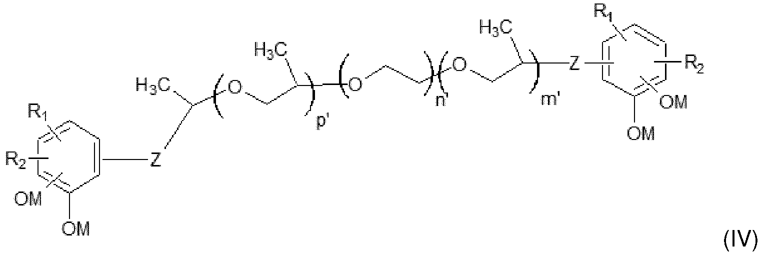 dans laquelle :
- R₁ est choisi dans le groupe constitué de H et des groupes (C₁-C₄)alkyles ; et
- M, R₂, n', m' et p' sont tels que définis dans la revendication 1.

8. Composé de formule (IV) selon la revendication 7, dans laquelle :
- R₁ est H ;
- R₂ est un groupe OM ; et
- Z est choisi dans le groupe constitué :
. des groupes -CHR₃-NH-, R₃ étant choisi dans le groupe constitué de H, de COOH et des groupes (C₁-C₆)alkyles, linéaires ou ramifiés ; et
. des groupes -C(=O)-NH-.

9. Utilisation d'un composé selon l'une quelconque des revendications 1 à 8 :
- comme agent chélatant des ions chargés positivement,
- comme agent fluidifiant pour des compositions hydrauliques,
- pour l'adjuvantation des liants hydrauliques, seul ou en combinaison avec au moins un plastifiant et/ou superplastifiant,
- pour diminuer la sensibilité aux argiles phyllosilicates d'une composition hydraulique, ou
- pour diminuer la sensibilité aux sulfates alcalins en solution d'une composition hydraulique.

10. Composition hydraulique comprenant :
- un composé selon l'une quelconque des revendications 1 à 8,
- au moins un liant hydraulique,
- au moins un granulat, et
- de l'eau.

## Patentansprüche

1. Verbindung von folgender Formel (I): 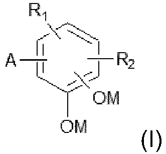 wobei:
• M ausgewählt ist aus der Gruppe, bestehend aus H, Alkali- und Erdalkalimetallen und ⁺HNRR'-Gruppen, wobei R und R' unabhängig voneinander ausgewählt sind aus H, geradkettigen oder verzweigten (C₁-C₃)-Alkylen und geradkettigen oder verzweigten (C₁-C₃)-Alkoholen;
• R₁ ausgewählt ist aus der Gruppe, bestehend aus H, A₁ und linearen oder verzweigten (C₁-C₄)-Alkylgruppen, wenn A der nachstehenden Formel (1) entspricht, oder wenn A der nachstehenden (2) oder (3) entspricht, ist R₁ ausgewählt aus der Gruppe, bestehend aus H und linearen oder verzweigten (C₁-C₄)-Alkylgruppen;
• R₂ ausgewählt ist aus der Gruppe, bestehend aus H, OM, wobei M wie oben definiert ist, und geradkettigen oder verzweigten (C₁-C₄)-Alkylgruppen;
• A Folgendes darstellt:
* eine Gruppe A₁ der folgenden Formel (1): 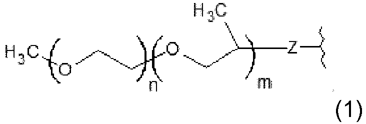 wobei:
- n eine ganze Zahl von 1 bis 40, vorzugsweise von 1 bis 31 ist;
- m eine ganze Zahl von 1 bis 40, vorzugsweise von 1 bis 31, ist; und
- Z ausgewählt ist aus der Gruppe, bestehend aus:
. den Gruppen -CHR₃-NH-, wobei R₃ ausgewählt ist aus der Gruppe, bestehend aus H, COOH und geradkettigen oder verzweigten (C₁-C₆)-Alkylgruppen;
. den Gruppen -C(=O)-NH-; und
.den Gruppen -C(R₅)=N-, wobei R₅ H oder Me ist;
* einer Gruppe A₂ der folgenden Formel (2): 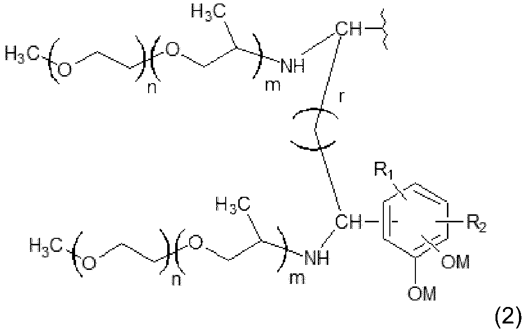 wobei:
- n eine ganze Zahl von 1 bis 40, vorzugsweise von 1 bis 31 ist;
- m eine ganze Zahl von 1 bis 40, vorzugsweise von 1 bis 31, ist;
- r 0 oder eine ganze Zahl von 1 bis 6 ist; und
- M, R₁ und R₂ wie oben definiert in Formel (I) sind;
* einer Gruppe A₃ der folgenden Formel (3): 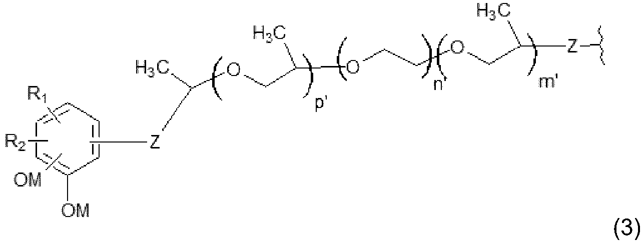 wobei:
- n' eine ganze Zahl von 1 bis 50, vorzugsweise von 1 bis 39, ist;
- die Summe m'+p' von 1 bis 6 variiert;
- m' eine ganze Zahl von 1 bis 5 ist;
- p' eine ganze Zahl von 1 bis 5 ist; und
- M, R₁ und R₂ wie oben definiert in Formel (I) sind;
- Z wie oben definiert in Formel (1) ist.

2. Verbindung nach Anspruch 1, die der folgenden Formel (II) entspricht: 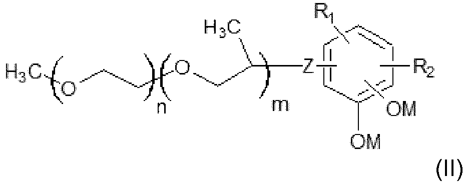 wobei:
- R₁ ausgewählt ist aus der Gruppe, bestehend aus H und (C₁-C₄)-Alkylgruppen, oder eine Gruppe A₁ von Formel (1) darstellt, wie definiert in Anspruch 1; und
- M, R₂, n, m wie definiert in Anspruch 1 sind.

3. Verbindung von Formel (II) nach Anspruch 2, wobei :
- R₂ eine OM -Gruppe ist;
- n von 19 bis 31 variiert;
- m von 3 bis 10 variiert; und
- Z ausgewählt ist aus der Gruppe, bestehend aus:
. den Gruppen -CHR₃-NH-, wobei R₃ ausgewählt ist aus der Gruppe, bestehend aus H, COOH und geradkettigen oder verzweigten (C₁-C₆)-Alkylgruppen; und
. den Gruppen -C(=O)-NH-.

4. Verbindung von Formel (II) nach Anspruch 3, wobei R₁ H ist oder eine Gruppe A₁ von Formel (1) darstellt, wie es in Anspruch 1 definiert ist.

5. Verbindung nach Anspruch 1, die der folgenden Formel (III) entspricht: 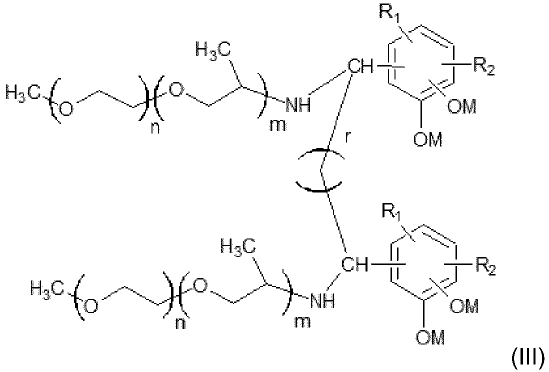 wobei:
- R₁ aus der Gruppe ausgewählt ist, die aus H und (C₁₋C₄)-Alkylgruppen besteht; und
- M, R₂, n, m und r wie definiert in Anspruch 1 sind.

6. Verbindung von Formel (III) nach Anspruch 5, wobei R₁ H ist und R₂ eine OM-Gruppe ist und r 0 ist oder von 1 bis 3 variiert.

7. Verbindung nach Anspruch 1, die der folgenden Formel (IV) entspricht: 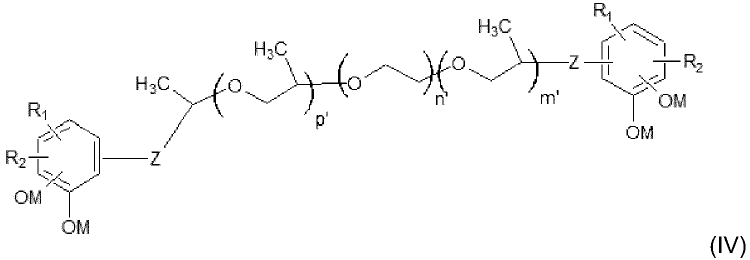 wobei:
- R₁ ausgewählt ist aus der Gruppe, bestehend aus H und (C₁-C₄)-Alkylgruppen; und
- M, R₂, n', m' und p' wie definiert in Anspruch 1 sind.

8. Verbindung von Formel (IV) nach Anspruch 7, wobei:
- R₁ H ist;
- R₂ eine OM-Gruppe ist; und
- Z ausgewählt ist aus der Gruppe, bestehend aus:
. den Gruppen -CHR₃-NH-, wobei R₃ ausgewählt ist aus der Gruppe, bestehend aus H, COOH und geradkettigen oder verzweigten (C₁-C₆)-Alkylgruppen; und
. den Gruppen -C(=O)-NH-.

9. Verwendung einer Verbindung nach einem der Ansprüche 1 bis 8:
- als Chelatbildner für positiv geladene Ionen,
- als Fließmittel für hydraulische Zusammensetzungen,
- für das Hinzufügen zu hydraulischen Bindemitteln, allein oder in Kombination mit mindestens einem Weichmacher und/oder Superweichmacher,
- um die Phyllosilikat-Tonempfindlichkeit einer hydraulischen Zusammensetzung zu reduzieren, oder
- eine Empfindlichkeit einer hydraulischen Zusammensetzung gegenüber Alkalisulfaten in Lösung zu reduzieren.

10. Hydraulische Zusammensetzung, umfassend:
- eine Verbindung nach einem der Ansprüche 1 bis 8,
- mindestens ein hydraulisches Bindemittel,
- mindestens ein Granulat, und
- Wasser.

## Claims

1. A compound with the following formula (I): 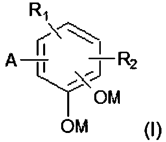 wherein:
• M is chosen from the group consisting of H, alkaline and alkaline earth metals and ⁺HNRR' groups, R and R' being chosen independently from each other from H, (C₁-C₃)alkyl, either linear or branched, and alcohols in C₁-C₃, either linear or branched;
• R₁ is chosen from the group consisting of H, A₁ and (C₁-C₄)alkyl groups, either linear or branched, when A is described by formula (1) below, or, where A is described by formula (2) or (3) below, R₁ is chosen from the group consisting of H and (C₁-C₄)alkyl groups, either linear or branched;
• R₂ is chosen from the group consisting of H, OM, M being as defined above and from (C₁-C₄) alkyl groups, either linear or branched;
• A stands for:
* a group A₁ with the following formula (1): 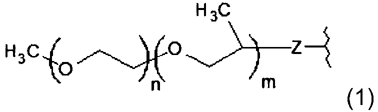 wherein:
- n is an integer from 1 to 40, preferentially from 1 to 31;
- m is an integer from 1 to 40, preferentially from 1 to 31; and
- Z is chosen from the group consisting of:
. -CHR₃-NH- groups, R₃ being chosen from the group consisting of H, COOH and (C₁-C₆)alkyl groups, either linear or branched;
. -C(=O)-NH- groups; and
. -C(R₅)=N- groups, where R₅ is H or Me;
* a group A₂ with the following formula (2): 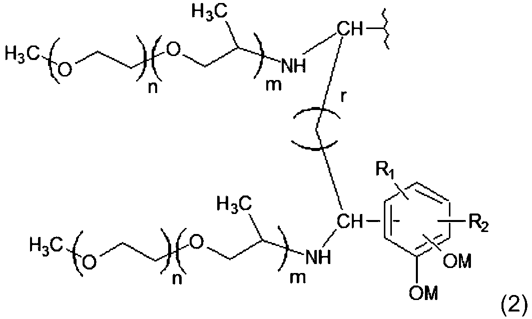 wherein:
- n is an integer from 1 to 40, preferentially from 1 to 31;
- m is an integer from 1 to 40, preferentially from 1 to 31;
- r is 0 or an integer from 1 to 6; and
- M, R₁ and R₂ are as defined above in formula (I);
* a group A₃ with the following formula (3): 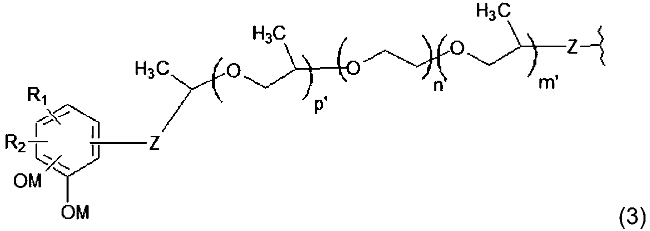 wherein:
- n' is an integer from 1 to 50, preferentially from 1 to 39;
- the sum of m'+p' varies from 1 to 6;
- m' is an integer from 1 to 5;
- p' is an integer from 1 to 5; and
- M, R₁ and R₂ are as defined above in formula (I);
- Z is as defined above in formula (1).

2. The compound according to claim 1, having the following formula (II): 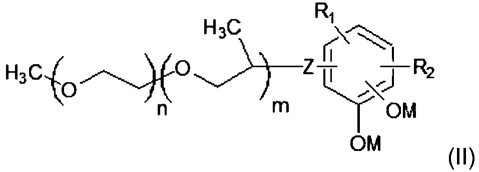 wherein:
- R₁ is chosen from the group consisting of H and (C₁-C₄)alkyl groups, or stands for a group A₁ with formula (1) as defined in claim 1; and
- M, R₂, n, m are as defined in claim 1.

3. The compound with formula (II) according to claim 2, wherein:
- R₂ is an OM group;
- n varies from 19 to 31;
- m varies from 3 to 10; and
- Z is chosen from the group consisting of:
. -CHR₃-NH- groups, where R₃ is chosen from the group consisting of H, COOH and (C₁-C₆)alkyl groups, either linear or branched; and
. -C(=O)-NH- groups.

4. The compound with formula (II) according to claim 3, wherein R₁ is H or stands for a group A₁ with formula (1) as defined in claim 1.

5. The compound according to claim 1, having the following formula (III): 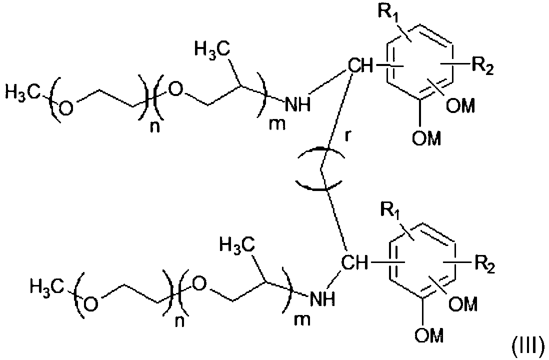 wherein:
- R₁ is chosen from the group consisting of H and (C₁-C₄)alkyl groups; and
- M, R₂, n, m and r are as defined in claim 1.

6. The compound with formula (III) according to claim 5, wherein R₁ is H and R₂ is an OM group and r is 0 or varies from 1 to 3.

7. The compound according to claim 1, described by the following formula (IV): 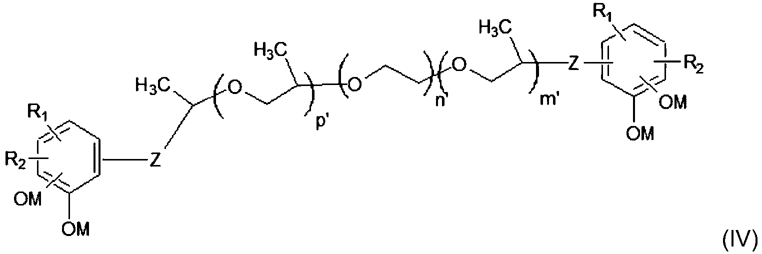 wherein:
- R₁ is chosen from the group consisting of H and (C₁-C₄)alkyl groups; and
- M, R₂, n', m' and p' are as defined in claim 1.

8. The compound with formula (IV) according to claim 7, wherein:
- R₁ is H;
- R₂ is an OM group; and
- Z is chosen from the group consisting of:
. -CHR₃-NH- groups, where R₃ is chosen from the group consisting of H, COOH and (C₁-C₆)alkyl groups, either linear or branched; and
. -C(=O)-NH- groups.

9. Use of a compound according to any one of claims 1 to 8:
- as a chelating agent of positively charged ions,
- as a fluidizing agent for hydraulic compositions,
- as an admixture to hydraulic binders alone or in combination with at least one plasticizer and/or superplasticizer,
- to decrease the sensitivity to phyllosilicate clays of a hydraulic composition, or
- to decrease the sensitivity to alkaline sulfates in solution of a hydraulic composition.

10. A hydraulic composition comprising:
- a compound according to any one of claims 1 to 8,
- at least one hydraulic binder,
- at least one aggregate, and
- water.
